# FASCICULE DE BREVET EUROPEEN

(11) **EP 3 870 825 B1**
(45) Date de publication et mention de la délivrance du brevet: **24.08.2022**
(21) Numéro de dépôt: 19813081.7
(22) Date de dépôt: 22.10.2019
(51) Int. Cl.: F02K 1/72

(54) **RÉTENTION AXIALE HAUTE POUR UN INVERSEUR À GRILLES COULISSANTES À STRUCTURE EN D**
OBERE AXIALE HALTERUNG FÜR EINEN GLEIT-KASKADEN-SCHUBUMKEHRER IN EINER D-STRUKTUR
UPPER AXIAL RETENTION FOR A SLIDING CASCADE-TYPE THRUST REVERSER IN A D-DUCT

(30) Priorité: 23.10.2018 FR 1859775
(43) Date de publication de la demande: 01.09.2021
(73) Titulaire: Safran Nacelles, 76700 Gonfreville-l'Orcher (FR)
(72) Inventeur: BOILEAU, Patrick, 77550 MOISSY CRAMAYEL (FR)
(74) Mandataire: Germain Maureau
(86) Numéro de dépôt international: PCT/FR2019/052504
(87) Numéro de publication internationale: WO 2020/084245

(56) Documents cités:
- EP-A1- 3 276 151
- WO-A1-2014/132011
- FR-A1- 3 031 726
- FR-A1- 3 031 728

## Description

La présente invention se rapporte à un ensemble propulsif pour aéronef et à un aéronef comportant un tel ensemble propulsif.

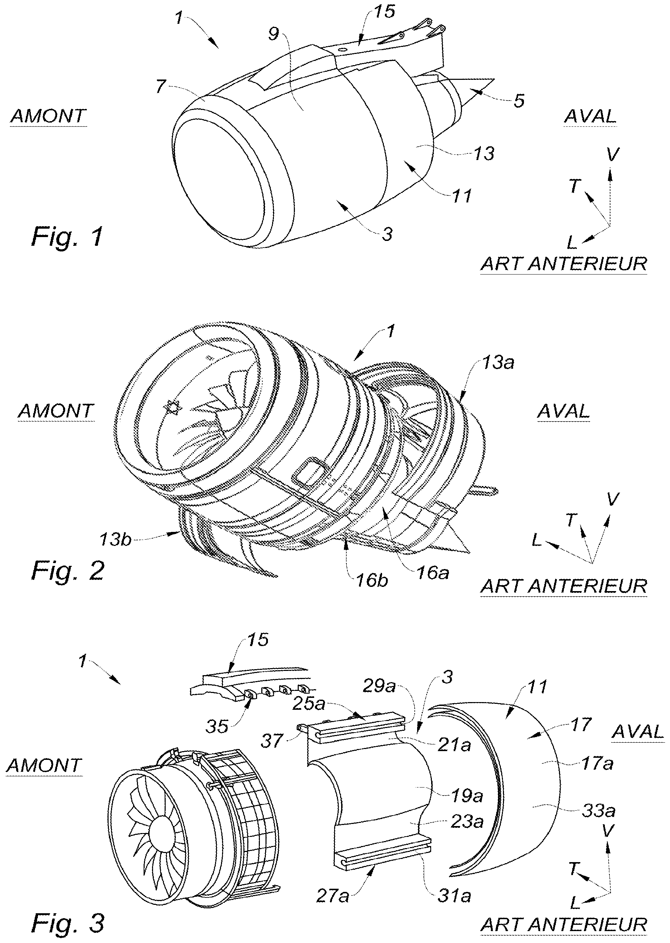

Un aéronef est mû par plusieurs ensembles propulsifs comprenant chacun un turboréacteur logé dans une nacelle. On se réfère à la figure 1 illustrant un ensemble propulsif 1 de l'art antérieur. Un ensemble propulsif 1 comprend une nacelle 3 et un turboréacteur 5 par exemple du type double flux, apte à générer, par l'intermédiaire des aubes de la soufflante en rotation, un flux de gaz chauds (également dénommé flux primaire) et un flux d'air froid (également dénommé flux secondaire) qui circule à l'extérieur du turboréacteur à travers un passage annulaire, également appelé veine, formé entre deux parois concentriques de la nacelle. Les flux primaire et secondaire sont éjectés du turboréacteur par l'arrière de la nacelle.

La nacelle 3 présente généralement une structure tubulaire comprenant une section amont, ou entrée d'air 7, située en amont du turboréacteur 5, une section médiane 9 destinée à entourer une soufflante du turboréacteur, une section aval 11, destinée à entourer la chambre de combustion du turboréacteur, embarquant des moyens d'inversion de poussée, et peut être terminée par une tuyère d'éjection située en aval du turboréacteur.

La section aval 11 présente généralement une structure externe comportant un capot externe 13, qui définit, avec une structure interne concentrique (non visible à la figure 1), dite « Inner Fixed Structure » (IFS), la veine annulaire servant à canaliser le flux d'air froid.

La structure interne définit une partie interne de la veine annulaire, et comporte généralement deux demi-coquilles reliées entre elles « à six heures » par l'intermédiaire d'un dispositif de verrouillage.

Généralement, la nacelle 3 est reliée par l'intermédiaire d'un pylône de suspension 15 encore appelé mât réacteur, à l'aile de l'avion (non représentée).

Les moyens d'inversion de poussée permettent, lors de l'atterrissage d'un avion, d'améliorer la capacité de freinage de celui-ci en redirigeant vers l'avant une fraction majoritaire de la poussée engendrée par le turboréacteur.

Dans cette phase, l'inverseur obstrue généralement la veine du flux froid et dirige ce dernier vers l'avant de la nacelle, engendrant de ce fait une contre-poussée qui vient s'ajouter au freinage des roues de l'avion. Les moyens mis en oeuvre pour réaliser cette réorientation du flux froid varient suivant le type d'inverseur.

Une configuration courante est celle des inverseurs de poussée dits « à grilles ».

Dans ce type d'inverseur de poussée, le capot externe 13 de la section aval est coulissant. La translation vers l'aval de ce capot coulissant permet de découvrir des grilles d'inversion mettant en communication la veine de flux froid et l'extérieur de la nacelle.

La translation du capot externe 13 permet en outre de déployer des volets de blocage dans la veine de flux froid. Ainsi, par l'action combinée des volets de blocage et des grilles d'inversion, le flux froid est redirigé vers l'avant de la nacelle.

Comme évoqué plus haut, les moyens d'inversion de poussée sont logés dans la section aval d'une nacelle. On connait principalement trois types de configuration structurelle pour la section aval, à savoir les structures respectivement dites « en C » (ou, en anglais, « C-duct »), « en D » (ou, en anglais, « D-duct ») et en « O » (ou, en anglais, « O-duct »).

Dans la suite de la description, l'expression « nacelle à structure en D » définit, pour une meilleure lecture, une « nacelle dont la section aval est à structure en D ». Il en va de même pour une « nacelle à structure en C » ou une « nacelle à structure en O ». De même, l'expression une « structure en D » définit la configuration structurelle de la section aval de la nacelle. Il en va de même pour une « structure en C » ou une « structure en O ».

Une nacelle à structure en O (non représentée aux figures) comporte un capot externe annulaire monobloc, tandis qu'une structure en C présente deux demi-capots externes 13a, 13b, visibles à la figure 2 illustrant un ensemble propulsif 1 en cours d'ouverture pour maintenance.

Dans une structure en O ou en C, le capot externe annulaire monobloc ou les demi-capots externes sont montés en translation le long de rails de coulissement disposés de part et d'autre du pylône de suspension de l'ensemble propulsif.

Le capotage externe, défini par le capot externe annulaire monobloc d'une structure en O ou par les demi-capots externes d'une structure en C est guidé au niveau de ses rails montés à douze heures dans la nacelle.

Pour accéder au turboréacteur d'une nacelle à structure en C, on déverrouille dans un premier temps les deux demi-capots 13a, 13b initialement verrouillés entre eux à six heures lorsque la nacelle est en fonctionnement, puis on ouvre dans un deuxième temps ces capots « en papillon » autour d'un axe sensiblement confondu avec l'axe longitudinal du pylône, puis on déverrouille dans un troisième temps les deux demi-coquilles 16a, 16b formant la structure interne de la section aval, puis on ouvre dans un quatrième temps les deux demi-coquilles 16a, 16b « en papillon », autour d'un axe parallèle à l'axe longitudinal de la nacelle.

Pour accéder au turboréacteur d'une nacelle à structure en O, on coulisse dans un premier temps le capot externe annulaire monobloc vers l'aval de la nacelle puis, dans un deuxième temps, on déverrouille les deux demi-coquilles formant la structure interne de la section aval puis, dans un troisième temps, on ouvre les deux demi-coquilles « en papillon », autour d'un axe parallèle à l'axe longitudinal de la nacelle.

On comprend qu'un inconvénient majeur des structures en C ou en O est que le temps nécessaire pour accéder au turboréacteur pour effectuer des opérations de maintenance est important. De même, le nombre d'étapes nécessaires pour accéder au turboréacteur est également élevé.

Une solution connue de l'art antérieur est d'utiliser des nacelles à section aval à structure en D.

On a illustré à la figure 3 un ensemble propulsif 1 en vue partielle éclatée comprenant une nacelle 3 dont la section aval 11 est à structure 17 en D.

Dans une nacelle à structure en D, les structures interne et externe de la section aval de la nacelle sont solidaires l'une de l'autre, par l'intermédiaire de deux ilots de liaisons dénommés bifurcations. Les bifurcations sont disposées respectivement selon les positions dites « à douze heures » (bifurcation supérieure) et « à six heures » (bifurcation inférieure).

Une structure en D comporte deux demi-structures en D, reliées entre elles à six heures au niveau de la bifurcation, et montées pivotantes autour d'un axe sensiblement confondu avec l'axe longitudinal du pylône 15.

On décrit à présent une demi-structure 17a en D de la nacelle à structure en D, qui est identique à une deuxième demi-structure formant la structure en D. Les éléments composant la demi-structure 17a en D et identifiés par le suffixe « a » peuvent être repris dans la suite de la description avec le suffixe « b » pour se référer à des éléments composant la demi-structure 17b en D, obtenue par symétrie de la demi-structure 17a par rapport à un plan (LV) de la nacelle.

Dans une structure en D, la demi-structure 17a en D comporte une demi-structure interne 19a, solidaire à douze heures d'une demi-bifurcation douze heures 21a et à six heures d'une demi-bifurcation six heures 23a.

Sur la demi-bifurcation douze heures 21a est montée une demi-poutre douze heures 25a, et sur la demi-bifurcation six heures 23a est montée une demi-poutre six heures 27a.

Chaque demi-poutre 25a, 27a supporte un rail de coulissement 29a, 31a d'un demi-capot externe 33a, monté en translation sur chaque demi-poutre six heures et douze heures. En terminologie anglo-saxonne, le capot externe translatant, formé par les deux demi-capots externes, est appelé « transcowI ». Ainsi, dans une structure en D, le capot externe translatant est guidé en translation au niveau de ses rails montés à six heures et à douze heures.

L'accès au turboréacteur d'une nacelle à structure en D est obtenu en déverrouillant dans un premier temps les deux demi-structures en D initialement verrouillées entre elles à six heures lorsque la nacelle est en fonctionnement, puis en ouvrant dans un deuxième temps ces demi-structures en D « en papillon » autour d'un axe sensiblement confondu avec l'axe longitudinal du pylône. A cet effet, chaque demi-poutre douze heure 25a (et 25b, non visible sur la figure) est articulée sur le pylône 15 par l'intermédiaire d'un ensemble de charnières 35, ces charnières comportant des chapes 37 réparties longitudinalement le long de chaque demi-poutre.

En prévoyant de rendre solidaire la demi-structure interne 19a du demi-capot externe 33a, l'ouverture en papillon des demi-structures en D permet d'accéder au turboréacteur en seulement deux temps. On réduit ainsi par rapport aux structures en C ou en O le temps d'intervention pour accéder au turboréacteur.

Dans le cas d'un inverseur de poussée à grilles, les grilles, qui assurent la redirection du flux froid, peuvent être fixes, c'est-à-dire qu'elles sont portées en leur partie amont par un cadre avant qui est solidaire du carter de soufflante du moteur, entourant la soufflante du moteur.

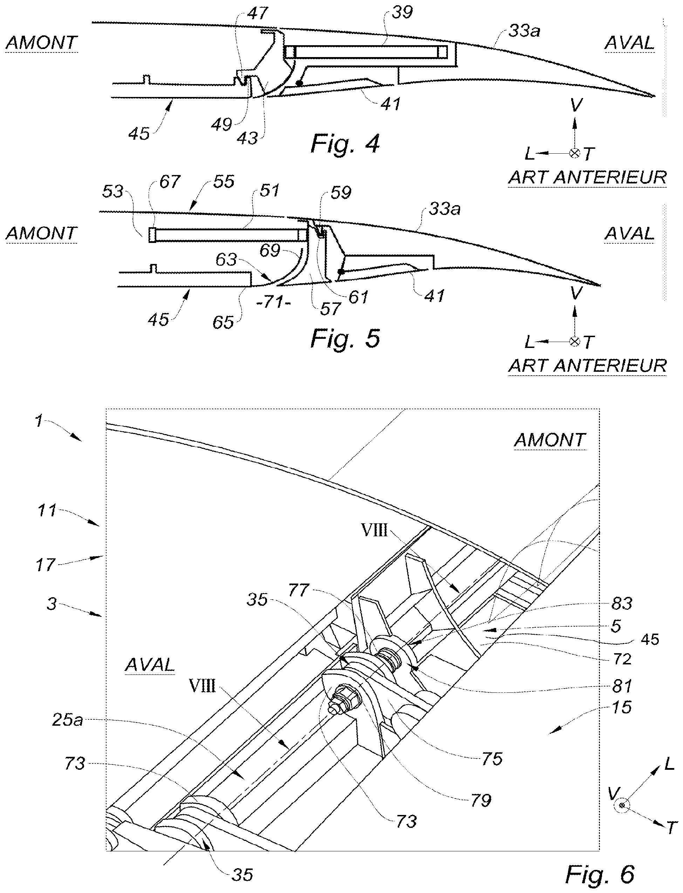

On a représenté à la figure 4 une vue en coupe longitudinale partielle d'un ensemble propulsif comportant une nacelle à structure en D dont l'inverseur de poussée est du type à grilles 39 de déviation fixes. La translation des demi-capots 33a, 33b (non visible aux figures) entre la position rétractée illustrée à la figure 4 et une position déployée dans laquelle il ouvre un passage dans la nacelle permet de découvrir les grilles de déviation du flux d'air secondaire. La réorientation du flux d'air secondaire traversant la veine annulaire est assurée par le déploiement de volets de blocage 41, illustrés ici en position rétractée pour un fonctionnement de la nacelle en jet direct.

Les grilles 39 de déviation restent fixes par rapport à l'ensemble propulsif lors de la translation des demi-capots. L'immobilité des grilles est assurée en prévoyant au niveau de la partie amont des grilles un cadre avant 43 supportant ces grilles et fixé sur le carter de soufflante 45 du turboréacteur. La fixation entre le carter de soufflante et le cadre avant des grilles est obtenue par exemple grâce à une liaison du type couteau 47 (« J-ring » en anglais) équipant le cadre avant 43 de grilles/cannelure 49 (« V-groove » en anglais) montée sur la circonférence d'un bord aval du carter de soufflante 45.

On connaît selon une autre réalisation les inverseurs de poussée du type à grilles mobiles en translation, que l'on a représenté à la figure 5 illustrant en coupe longitudinale partielle un ensemble propulsif comportant une nacelle à structure en D dont l'inverseur de poussée est du type à grilles 51 de déviation mobiles. Le fait de prévoir des grilles translatantes dans un inverseur de poussée permet de réduire la longueur de la nacelle et par conséquent de limiter sa masse et sa traînée. En effet, lorsque la nacelle fonctionne en jet direct, les grilles sont logées dans une enveloppe annulaire 53 définie par l'espace annulaire compris entre le carter de soufflante 45 du turboréacteur et le capot de soufflante 55 de la nacelle, entourant le carter de soufflante.

La mobilité des grilles 51 est assurée en prévoyant au niveau de la partie aval des grilles un cadre aval 57 supportant ces grilles et fixé sur les demi-capots 33a, 33b (non visible aux figures). La fixation entre les demi-capots et le cadre aval des grilles est obtenue par exemple grâce à une liaison du type couteau 59 (« J-ring » en anglais) équipant les demi-capots/cannelure 61 (« V-groove » en anglais) montée sur un bord aval du cadre aval 57 des grilles.

Ainsi, lorsque les demi-capots sont déplacés en translation vers l'aval de la nacelle pour un fonctionnement en jet inversé, ce déplacement entraîne de concert le déplacement des grilles en aval de l'enveloppe annulaire 53. Aussi, la liaison du type couteau/cannelure permet par ailleurs de libérer les demi-capots des grilles auxquelles ils sont rattachés lorsque ces capots sont entraînés en rotation autour de l'axe longitudinal de la nacelle (grâce aux charnières installées sur les demi-poutres douze heures en prise avec les charnières du pylône de suspension) lorsqu'une maintenance de la nacelle est envisagée.

Comme on le remarque sur cette figure, contrairement à une nacelle à structure en D dont l'inverseur de poussée est du type à grilles fixes discuté à la figure 4, plus aucune liaison entre le carter de soufflante 45 et le dispositif d'inversion de poussée n'est opérée à douze heures.

Cette absence de liaison à douze heures entre le carter moteur et le dispositif d'inversion de poussée entraîne un jeu axial très important entre le dispositif d'inversion de poussée et le carter de soufflante, qu'il convient de limiter afin d'éviter une distorsion de la veine due au glissement entre les demi-bifurcations 21a, 21b et les demi-structures internes 19a, 19b pouvant entraîner des pertes de performanes dans la veine secondaire. Il convient également de limiter ce jeu axial afin d'éviter une situation d'arc-boutement des demi-poutres douze heures, cela pouvant générer des usures rapides et prématurées des axes charnières. Le document EP 3 276 151 A1 décrit encore un autre inverseur de poussée de l'art antérieur.

La présente invention vise à pallier les inconvénients ci-dessus, c'est-à-dire proposer une nacelle pour turboréacteur d'aéronef, à structure aval en D, comportant un inverseur de poussée à grilles mobiles dont le jeu axial à douze heures entre le carter de soufflante et le dispositif d'inversion de poussée est limité par rapport à l'art antérieur.

A cet effet, la présente invention concerne un ensemble propulsif pour aéronef, comprenant un turboréacteur, ledit turboréacteur comprenant un carter de soufflante, une nacelle et un pylône de suspension, reliant ladite nacelle à une aile de l'avion, ladite nacelle comprenant :
- une section amont d'entrée d'air;
- une section médiane, dans le prolongement aval de ladite section amont, comprenant un capot de soufflante, l'espace annulaire compris entre le capot de soufflante et le carter de soufflante du turboréacteur définissant une enveloppe annulaire ;
- une section aval à structure en D embarquant un dispositif d'inversion de poussée, ladite section aval à structure en D comprenant des grilles de déviation mobiles entre une position rétractée selon laquelle les grilles sont logées dans ladite enveloppe annulaire de la section médiane et une position déployée selon laquelle lesdites grilles sont déplacées en aval de ladite enveloppe annulaire, ladite section aval à structure en D comportant deux demi-structures en D comprenant chacune :
   ∘ un demi-capot externe mobile en translation lors de l'activation de moyens d'actionnement le long d'un axe sensiblement longitudinal de l'ensemble propulsif, entre une position rétractée assurant une continuité aérodynamique avec le capot de soufflante et une veine annulaire, pour un fonctionnement de la nacelle en jet direct et une position déployée ouvrant un passage annulaire dans la nacelle pour un fonctionnement de la nacelle en jet inversé ;
   ∘ un moyen de liaison entre les grilles de déviation et ledit demi-capot externe, agencé de sorte que les grilles déviation se déplacent de concert avec ledit demi-capot externe lors de l'activation desdits moyens d'actionnement ;
   ∘ une demi-bifurcation douze heures ;
   ∘ une demi-structure interne définissant une partie interne de la veine annulaire de la nacelle lorsque la nacelle est en fonctionnement, ladite demi-structure interne étant reliée audit demi-capot externe par ladite demi-bifurcation douze heures ;
- une demi-poutre douze heures, montée sur la demi-bifurcation douze heures, supportant un rail de coulissement en translation du demi-capot externe et articulée sur ledit pylône de suspension,
ledit ensemble propulsif étant remarquable en ce qu'il comporte un moyen de rétention axiale de la section aval à structure en D de la nacelle, par rapport au turboréacteur, ledit moyen de rétention axiale étant conçu pour assurer une liaison définissant une rétention axiale entre au moins une desdites demi-poutres douze heures et un élément fixe du carter de soufflante du turboréacteur.

Ainsi, en prévoyant d'équiper un ensemble propulsif du type à nacelle à section aval en structure en D et dont les grilles du dispositif d'inversion de poussée sont translatantes d'un moyen de rétention axiale de la section aval à structure en D de la nacelle, par rapport au turboréacteur, conçu pour assurer une liaison définissant une rétention axiale entre au moins une desdites demi-poutres douze heures et un élément fixe du carter de soufflante du turboréacteur, on définit une liaison axiale à douze heures entre le turboréacteur et le dispositif d'inversion de poussée. Cela permet de limiter considérablement le jeu axial entre le dispositif d'inversion de poussée et le carter de soufflante qui est présent dans les configurations de l'art antérieur.

Selon des caractéristiques optionnelles de l'ensemble propulsif de l'invention :
- selon un premier mode de réalisation, la demi-poutre douze heures est articulée sur ledit pylône de suspension par l'intermédiaire d'un ensemble de charnières, lesdites charnières comportant des chapes sur lesdites demi-poutres douze heures, et le moyen de rétention axiale comporte au moins une tige de rétention dont une première extrémité est attachée à au moins une desdites chapes d'une part et dont une deuxième extrémité est attachée à l'élément fixe du carter de soufflante du turboréacteur d'autre part, ladite tige de rétention étant conçue pour définir une butée double effet entre ladite au moins une desdites chapes et ledit élément fixe du carter de soufflante du turboréacteur ;
- selon une réalisation, la tige de rétention comporte un axe longitudinal coaxial avec l'axe longitudinal de ladite au moins une desdites chapes sur laquelle ladite tige de rétention est attachée ;
- selon une réalisation, l'élément fixe du carter de soufflante du turboréacteur comporte une oreille de rétention présentant un alésage dont l'axe longitudinal est coaxial avec l'axe longitudinal de ladite au moins une desdites chapes sur laquelle ladite tige de rétention est attachée ;
- selon une réalisation, la tige de rétention est montée dans l'oreille de rétention de l'élément fixe du carter de soufflante du turboréacteur de façon à définir un jeu radial entre ladite tige de rétention et l'alésage de ladite oreille de rétention ;
- selon un deuxième mode de réalisation, la demi-poutre douze heures est articulée sur ledit pylône de suspension par l'intermédiaire d'un ensemble de charnières, lesdites charnières comportant des chapes sur lesdites demi-poutres douze heures, et le moyen de rétention axiale comporte au moins une bielle de rétention dont une première extrémité est montée sur au moins une desdites demi-poutres douze heures et dont une deuxième extrémité est montée sur l'élément fixe du carter de soufflante du turboréacteur ;
- selon une réalisation, la première extrémité de la bielle de rétention est montée au niveau d'un bord amont de ladite au moins une desdites demi-poutres douze heures, à proximité de la chape la plus en amont desdites chapes desdites demi-poutres douze heures ;
- selon un troisième mode de réalisation, la demi-poutre douze heures est articulée sur ledit pylône de suspension par l'intermédiaire d'un ensemble de charnières, lesdites charnières comportant des chapes sur lesdites demi-poutres douze heures, et le moyen de rétention axiale comporte :
   ∘ au moins une tige de rétention dont une première extrémité est attachée à au moins une desdites chapes d'une part et dont une deuxième extrémité est attachée à l'élément fixe du carter de soufflante du turboréacteur d'autre part, ladite tige de rétention étant conçue pour définir une butée double effet entre ladite au moins une desdites chapes et ledit élément fixe du carter de soufflante du turboréacteur,
   ∘ au moins une chape de rétention, montée au niveau de la première extrémité de ladite tige de rétention, et
   ∘ une bielle de rétention, dont une première extrémité est montée sur ladite chape de rétention et dont une deuxième extrémité est montée sur l'élément fixe du carter de soufflante du turboréacteur ;
- selon une disposition avantageuse commune à l'ensemble des modes de réalisation de l'ensemble propulsif de l'invention, le moyen de rétention axiale est conçu pour assurer une liaison définissant une rétention axiale entre un bord amont de ladite au moins une desdites demi-poutres douze heures et l'élément fixe du carter de soufflante du turboréacteur ;
- selon une autre disposition commune à l'ensemble des modes de réalisation de l'ensemble propulsif de l'invention, le carter de soufflante du turboréacteur comporte en sa partie aval un bord de déviation, l'élément fixe du carter de soufflante du turboréacteur comporte ledit bord de déviation et le moyen de rétention axial est conçu pour assurer une liaison définissant une rétention axiale entre au moins une desdites demi-poutres douze heures et ledit bord de déviation du carter de soufflante du turboréacteur.

L'invention concerne également un aéronef comportant au moins un ensemble propulsif selon l'invention.

D'autres caractéristiques et avantages de l'invention apparaîtront à la lecture de la description détaillée qui suit pour la compréhension de laquelle on se reportera aux dessins annexés dans lesquels :
- la figure 1 est une vue isométrique d'un ensemble propulsif de l'art antérieur ;
- la figure 2 illustre un ensemble propulsif de l'art antérieur, en cours d'ouverture de la nacelle pour la maintenance du turboréacteur ;
- la figure 3 illustre en vue éclatée un ensemble propulsif de l'art antérieur équipé d'une nacelle à structure en D ;
- la figure 4 est une vue en coupe longitudinale partielle d'un ensemble propulsif de l'art antérieur, comportant une nacelle à structure en D dont l'inverseur de poussée est du type à grilles de déviation fixes ;
- la figure 5 est une vue en coupe longitudinale partielle d'un ensemble propulsif de l'art antérieur, comportant une nacelle à structure en D dont l'inverseur de poussée est du type à grilles de déviation mobiles ;
- la figure 6 illustre l'ensemble propulsif de l'invention obtenu selon un premier mode de réalisation, le dispositif d'inversion de poussée étant illustré en position fermée ;
- la figure 7 illustre l'ensemble propulsif de la figure 6, le dispositif d'inversion de poussée étant illustré en position d'ouverture pour maintenance ;
- la figure 8 est une vue en coupe selon la ligne VIII-VIII de la figure 6 ;
- la figure 9 illustre l'ensemble propulsif obtenu selon un deuxième mode de réalisation, le dispositif d'inversion de poussée étant illustré en position fermée ;
- la figure 10 illustre l'ensemble propulsif de la figure 9, le dispositif d'inversion de poussée étant illustré en position d'ouverture pour maintenance.

Dans la description et dans les revendications, les termes « amont » et «aval » doivent s'entendre par rapport à la circulation du flux d'air à l'intérieur de l'ensemble propulsif formé par la nacelle et le turboréacteur, c'est-à-dire de la gauche vers la droite en référence à la figure 1.

De même, on utilisera à titre non limitatif les expressions « interne » et « externe » en référence à l'éloignement radial par rapport à l'axe longitudinal de la nacelle, l'expression « interne » définissant une zone radialement plus proche de l'axe longitudinal de la nacelle, par opposition à l'expression « externe ».

Par ailleurs, dans la description et les revendications, pour clarifier la description et les revendications, on adoptera à titre non limitatif la terminologie longitudinal, vertical et transversal en référence au trièdre L, V, T indiqué aux figures.

En outre, sur l'ensemble des figures, des références identiques ou analogues représentent des organes ou ensembles d'organes identiques ou analogues.

On se réfère à la figure 6 qui illustre l'ensemble propulsif obtenu selon un premier mode de réalisation, en vue isométrique centrée sur la zone douze heures et en position fermée.

L'ensemble propulsif de l'invention intègre une nacelle du type à section aval à structure en D embarquant un dispositif d'inversion de poussée et comportant des grilles de déviation mobiles en translation. L'ensemble propulsif de l'invention est ainsi généralement conforme à la description donnée en référence aux figures 1, 3 et 5 et les références utilisées pour ces figures s'appliquent à l'ensemble propulsif de l'invention.

Selon l'invention, l'ensemble propulsif 1 comporte, entre la section aval 11 à structure 17 en D de la nacelle 3 et le turboréacteur 5, un moyen de rétention axiale. Comme on va le voir dans la suite de la description, le moyen de rétention axiale est conçu pour assurer une liaison qui définit une rétention axiale entre les demi-poutres douze heures 25a, 25b (seule la demi-poutre 25a est visible à la figure 6) d'une part, et un élément fixe 72 du carter de soufflante 45 du turboréacteur d'autre part. L'élément fixe 72 du carter de soufflante 45 peut faire partie intégrante du carter de soufflante, ou au contraire être rapporté au carter de soufflante 45.

Chaque charnière 35 comporte de façon connue une chape 73, montée sur les demi-poutres 25a, 25b. La chape 73 reçoit un axe 75 solidaire du pylône 15.

Selon le premier mode de réalisation de l'ensemble propulsif 1 de l'invention représenté à la figure 6, le moyen de rétention axiale comporte une tige de rétention 77 qui traverse la chape 73 et dont une première extrémité 79 vient s'attacher sur la chape 73, et dont une deuxième extrémité 81 vient s'attacher sur l'élément fixe 72 du turboréacteur 5.

La tige de rétention 77 est agencée dans l'ensemble propulsif et conçue de telle sorte qu'elle définit une butée double effet entre la chape 73 et l'élément fixe 72 du turboréacteur.

A cet effet, l'élément fixe 72 du carter de soufflante 45 du turboréacteur comporte une oreille de rétention 83 qui présente un alésage. L'axe longitudinal de l'alésage est sensiblement coaxial avec l'axe longitudinal de la chape 73 sur laquelle la tige de rétention 77 est attachée.

De façon préférée, la tige de rétention 77 est, d'une part, attachée à une unique chape parmi l'ensemble de chapes réparties longitudinalement sur la demi-poutre 25a, par exemple la chape la plus en amont de la demi-poutre douze heures, et, d'autre part, attachée à l'élément fixe 72 du turboréacteur.

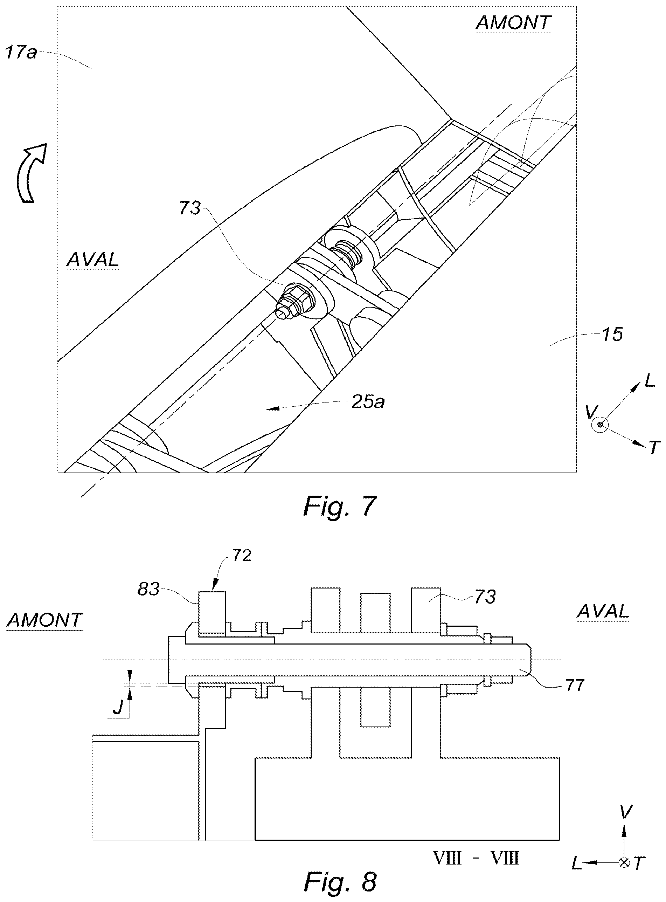

La tige de rétention 77 présente en outre un axe longitudinal coaxial avec l'axe longitudinal de la chape 73 sur laquelle est attachée. Cela permet de ne pas entraver la cinématique d'ouverture des demi-structures en D comme on peut le voir à la figure 7 illustrant l'ensemble propulsif 1 dans lequel la demi-structure en D 17a a été déverrouillée de la demi-structure en D 17b (non visible) puis a été pivotée autour de l'axe sensiblement confondu à l'axe longitudinal du pylône 15 afin d'effectuer des opérations de maintenance du turboréacteur.

On se réfère à la figure 8 illustrant schématiquement la liaison entre la tige de rétention 77, l'oreille de rétention 83 de l'élément fixe 72 et la chape 73 de la demi-poutre, en coupe selon la ligne VIII-VIII de la figure 6. Selon une disposition de l'invention, la tige de rétention 77 est montée dans l'oreille de rétention 83 de l'élément fixe 72 de façon à définir un jeu J radial avec l'alésage de l'oreille de rétention 79. Cela permet de conserver un certain degré de liberté avec l'axe moteur et ainsi d'éviter une situation d'hyperstatisme pouvant contraindre le système, les demi-structures en D étant reliées au pylône par l'intermédiaire des chapes des charnières tandis que l'oreille de rétention est reliée au turboréacteur.

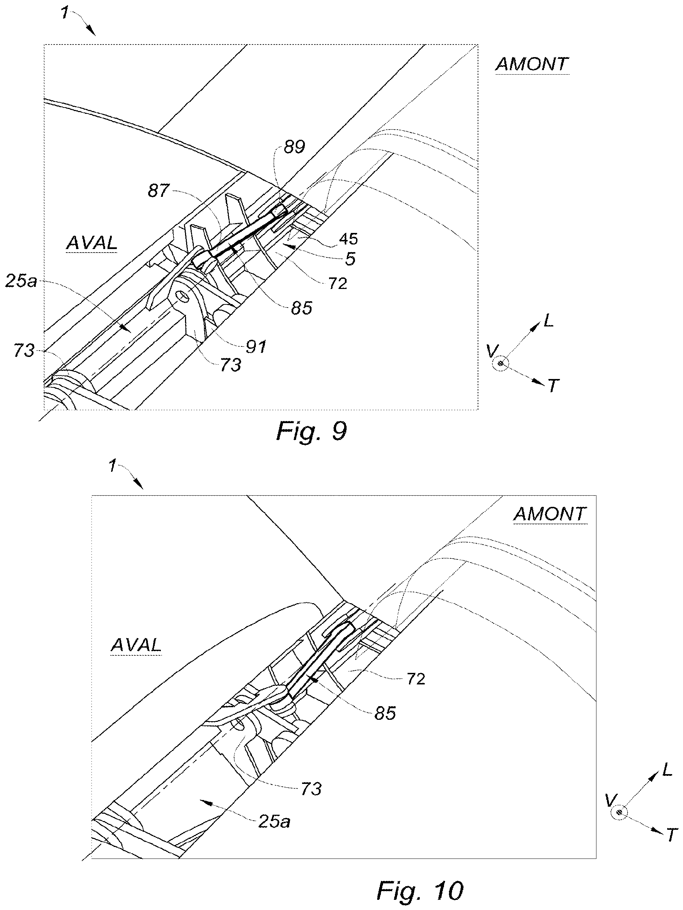

On se réfère à présent aux figures 9 et 10 illustrant l'ensemble propulsif obtenu selon un deuxième mode de réalisation de l'invention, en vue isométrique centrée sur la zone douze heures, respectivement en position de fermeture et dans une position de maintenance selon laquelle la demi-structure en D 17a a été déverrouillée de la demi-structure en D 17b (non visible) puis a été pivotée autour de l'axe sensiblement confondu à l'axe longitudinal du pylône 15.

Selon le deuxième mode de réalisation de l'ensemble propulsif 1 de l'invention, le moyen de rétention axiale comporte une bielle de rétention 85.

La bielle de rétention 85 comporte une première extrémité 87 montée sur la demi-poutre douze heures 25a et une deuxième extrémité 89 montée sur l'élément fixe 72 du turboréacteur 5.

Selon une réalisation préférée du deuxième mode de réalisation, la première extrémité 87 de la bielle de rétention 85 est montée au niveau d'un bord amont 91 de la demi-poutre douze heures 25a, à proximité de la chape 73 la plus en amont parmi l'ensemble de chapes 73 montées sur la demi-poutre douze heures 25a.

La bielle de rétention 85 est agencée dans l'ensemble propulsif et conçue de telle sorte qu'elle assure une liaison définissant une rétention axiale entre la demi-poutre douze heures sur laquelle elle est montée et l'élément fixe 72 du turboréacteur.

Selon un troisième mode de réalisation non représenté aux figures le moyen de rétention axiale combine les moyens de rétention axiale des premier et deuxième modes de réalisation.

Le moyen de rétention axiale de ce mode de réalisation comporte une tige de rétention conforme à la tige de rétention 77 utilisée dans le premier mode de réalisation, c'est-à-dire qu'une première extrémité est attachée à la chape portée par la demi-poutre et une deuxième extrémité est attachée l'élément fixe du turboréacteur

Au niveau de la première extrémité de cette tige de rétention, c'est-à-dire l'extrémité attachée à la chape portée par la demi-poutre, est montée une chape de rétention sur laquelle est montée une bielle de rétention. La première extrémité de la bielle de rétention est montée sur la chape de rétention tandis que la deuxième extrémité de la bielle de rétention est montée sur l'élément fixe du turboréacteur.

Ce troisième mode de réalisation permet de renforcer encore par rapport aux deux premiers modes de réalisation la rétention axiale obtenue par le moyen de rétention entre la demi-poutre et le turboréacteur.

Selon une réalisation particulière de l'ensemble propulsif de l'invention, l'élément fixe 72 du carter de soufflante 45 du turboréacteur 5 peut comporter à titre d'exemple non limitatif le bord de déviation 63, visible à la figure 5.

Le bord de déviation se trouve au niveau de la partie aval du carter de soufflante 45 du turboréacteur. Le bord de déviation 63 adopte une forme généralement annulaire, dont sa section longitudinale est parabolique. Le bord de déviation 63 est solidaire du carter de soufflante 45 du turboréacteur 5, et définit un prolongement du carter de soufflante 45 au niveau d'un bord aval 65 du carter de soufflante. Lorsque l'ensemble propulsif fonctionne en jet inversé, les grilles de déviation 51 sont déplacées vers l'aval de l'ensemble propulsif 1 jusqu'à être complètement extraites de l'enveloppe annulaire 53. Dans cette configuration d'inversion de poussée (non représentée), le cadre avant 67 des grilles de déviation vient au droit de de l'extrémité aval 69 du bord de déviation 63. Le flux d'air secondaire, dévié par les volets de blocage 41 qui se trouvent en position déployée, vient alors lécher le bord de déviation 63. En position de jet inversé, le bord de déviation 63 définit ainsi une continuité aérodynamique entre la veine annulaire 71 et les grilles de déviation 51 qui se trouvent en position reculées.

Selon l'invention, le moyen de rétention axial est conçu pour assurer une liaison définissant une rétention axiale entre les demi-poutres douze heures et le bord de déviation du carter de soufflante du turboréacteur.

Comme il va de soi, la présente invention ne se limite pas aux seules formes de réalisation de cet ensemble propulsif, décrites ci-dessus uniquement à titre d'exemples illustratifs, mais elle embrasse au contraire toutes les variantes entrant dans l'objet défini par les revendications.

## Revendications

1. Ensemble propulsif (1) pour aéronef, comprenant un turboréacteur (5), ledit turboréacteur comprenant un carter de soufflante (45), une nacelle (3) et un pylône (15) de suspension, reliant ladite nacelle à une aile de l'avion, ladite nacelle comprenant :
- une section amont d'entrée d'air;
- une section médiane (9), dans le prolongement aval de ladite section amont, comprenant un capot de soufflante (55), l'espace annulaire compris entre le capot de soufflante (55) et le carter de soufflante (45) du turboréacteur (5) définissant une enveloppe annulaire (53) ;
- une section aval (11) à structure en D embarquant un dispositif d'inversion de poussée, ladite section aval (11) à structure en D comprenant des grilles de déviation (51) mobiles entre une position rétractée selon laquelle les grilles sont logées dans ladite enveloppe annulaire (53) de la section médiane (9) et une position déployée selon laquelle lesdites grilles sont déplacées en aval de ladite enveloppe annulaire (53), ladite section aval (11) à structure en D comportant deux demi-structures (17a, 17b) en D comprenant chacune :
∘ un demi-capot externe (33a, 33b), mobile en translation lors de l'activation de moyens d'actionnement le long d'un axe sensiblement longitudinal de l'ensemble propulsif (1), entre une position rétractée assurant une continuité aérodynamique avec le capot de soufflante (55) et une veine annulaire (71), pour un fonctionnement de la nacelle (3) en jet direct et une position déployée ouvrant un passage annulaire dans la nacelle pour un fonctionnement de la nacelle en jet inversé ;
∘ un moyen de liaison entre les grilles de déviation (51) et ledit demi-capot externe (33a, 33b), agencé de sorte que les grilles déviation (51) se déplacent de concert avec ledit demi-capot externe (33a, 33b) lors de l'activation desdits moyens d'actionnement ;
∘ une demi-bifurcation douze heures (21a, 21b) ;
∘ une demi-structure interne (19a, 19b) définissant une partie interne de la veine annulaire (71) de la nacelle lorsque la nacelle (3) est en fonctionnement, ladite demi-structure interne étant reliée audit demi-capot externe (33a, 33b) par ladite demi-bifurcation douze heures (21a, 21b) ;
ledit ensemble propulsif (1) étant **caractérisé en ce qu'**il comporte une demi-poutre douze heures (25a, 25b), montée sur la demi-bifurcation douze heures (21a, 21b), supportant un rail de coulissement (29a, 29b) en translation du demi-capot externe (33a, 33b) et articulée sur ledit pylône (15) de suspension, et un moyen de rétention axiale de la section aval (11) à structure en D de la nacelle, par rapport au turboréacteur (5), ledit moyen de rétention axiale étant conçu pour assurer une liaison définissant une rétention axiale entre au moins une desdites demi-poutres douze heures (25a, 25b) et un élément fixe (72) du carter de soufflante (45) du turboréacteur (5).

2. Ensemble propulsif (1) selon la revendication 1, dans lequel ladite demi-poutre douze heures (25a, 25b) est articulée sur ledit pylône (15) de suspension par l'intermédiaire d'un ensemble de charnières (35), lesdites charnières (35) comportant des chapes (37) sur lesdites demi-poutres douze heures (25a, 25b), **caractérisé en ce que** le moyen de rétention axiale comporte au moins une tige de rétention (77) dont une première extrémité (79) est attachée à au moins une desdites chapes (37) d'une part et dont une deuxième extrémité (81) est attachée à l'élément fixe (72) du carter de soufflante (45) du turboréacteur (5) d'autre part, ladite tige de rétention (77) étant conçue pour définir une butée double effet entre ladite au moins une desdites chapes (37) et ledit élément fixe du carter de soufflante (45) du turboréacteur (5).

3. Ensemble propulsif (1) selon la revendication 2, **caractérisé en ce que** la tige de rétention (77) comporte un axe longitudinal coaxial avec l'axe longitudinal de ladite au moins une desdites chapes (37) sur laquelle ladite tige de rétention (77) est attachée.

4. Ensemble propulsif (1) selon l'une des revendications 2 ou 3, **caractérisé en ce que** l'élément fixe (72) du carter de soufflante (45) du turboréacteur (5) comporte une oreille de rétention (83) présentant un alésage dont l'axe longitudinal est coaxial avec l'axe longitudinal de ladite au moins une desdites chapes (37) sur laquelle ladite tige de rétention (77) est attachée.

5. Ensemble propulsif (1) selon la revendication 4, **caractérisé en ce que** la tige de rétention (77) est montée dans l'oreille de rétention (83) de l'élément fixe (72) du carter de soufflante (45) du turboréacteur (5) de façon à définir un jeu (J) radial entre ladite tige de rétention (77) et l'alésage de ladite oreille de rétention (83).

6. Ensemble propulsif (1) selon la revendication 1, dans lequel ladite demi-poutre douze heures (25a, 25b) est articulée sur ledit pylône (15) de suspension par l'intermédiaire d'un ensemble de charnières (35), lesdites charnières (35) comportant des chapes (37) sur lesdites demi-poutres douze heures (25a, 25b), **caractérisé en ce que** le moyen de rétention axiale comporte au moins une bielle de rétention (85) dont une première extrémité (87) est montée sur au moins une desdites demi-poutres douze heures (25a, 25b) et dont une deuxième extrémité (89) est montée sur l'élément fixe (72) du carter de soufflante (45) du turboréacteur (5).

7. Ensemble propulsif (1) selon la revendication 6, **caractérisé en ce que** la première extrémité (87) de la bielle de rétention (85) est montée au niveau d'un bord amont (91) de ladite au moins une desdites demi-poutres douze heures (25a, 25b), à proximité de la chape la plus en amont desdites chapes (37) desdites demi-poutres douze heures (25a, 25b).

8. Ensemble propulsif (1) selon la revendication 1, dans lequel ladite demi-poutre douze heures (25a, 25b) est articulée sur ledit pylône (15) de suspension par l'intermédiaire d'un ensemble de charnières (35), lesdites charnières (35) comportant des chapes (37) sur lesdites demi-poutres douze heures (25a, 25b), **caractérisé en ce que** le moyen de rétention axiale comporte :
- au moins une tige de rétention (77) dont une première extrémité (79) est attachée à au moins une desdites chapes (37) d'une part et dont une deuxième extrémité (81) est attachée à l'élément fixe (72) du carter de soufflante (45) du turboréacteur (5) d'autre part, ladite tige de rétention (77) étant conçue pour définir une butée double effet entre ladite au moins une desdites chapes (37) et ledit élément fixe (72) du carter de soufflante (45) du turboréacteur (5),
- au moins une chape de rétention, montée au niveau de la première extrémité de ladite tige de rétention (77), et
- une bielle de rétention (85), dont une première extrémité (87) est montée sur ladite chape de rétention et dont une deuxième extrémité (89) est montée sur l'élément fixe (72) du carter de soufflante (45) du turboréacteur (5).

9. Ensemble propulsif (1) selon l'une quelconque des revendications 1 à 8, **caractérisé en ce que** le moyen de rétention axiale est conçu pour assurer une liaison définissant une rétention axiale entre un bord amont (91) de ladite au moins une desdites demi-poutres douze heures (25a, 25b) et l'élément fixe (72) du carter de soufflante (45) du turboréacteur (5).

10. Ensemble propulsif selon l'une quelconque des revendications 1 à 9, dans lequel le carter de soufflante (45) du turboréacteur (5) comporte en sa partie aval un bord de déviation (63), **caractérisé en ce que** l'élément fixe (72) du carter de soufflante (45) du turboréacteur (5) comporte ledit bord de déviation (63) et **en ce que** le moyen de rétention axial est conçu pour assurer une liaison définissant une rétention axiale entre au moins une desdites demi-poutres douze heures (25a, 25b) et ledit bord de déviation (63) du carter de soufflante (45) du turboréacteur (5).

11. Aéronef comportant au moins un ensemble propulsif (1) selon l'une quelconque des revendications 1 à 10.

## Patentansprüche

1. Antriebseinheit (1) für ein Luftfahrzeug, umfassend ein Turbostrahltriebwerk (5), wobei das Turbostrahltriebwerk ein Gebläsegehäuse (45), eine Gondel (3) und einen Trägermast (15) umfasst, der die Gondel mit einer Tragfläche des Flugzeugs verbindet, wobei die Gondel umfasst:
- einen Abschnitt stromaufwärts des Lufteingangs;
- einen medianen Abschnitt (9), in der stromabwärtigen Verlängerung des stromaufwärtigen Abschnitts, umfassend eine Gebläsehaube (55), wobei der zwischen der Gebläsehaube (55) und dem Gebläsegehäuse (45) des Turbostrahltriebwerks (5) umfasste ringförmige Raum eine ringförmige Hülle (53) definiert;
- einen stromabwärtigen Abschnitt (11) in einer D-Struktur, der eine Schubumkehrvorrichtung beherbergt, wobei der stromabwärtige Abschnitt (11) in einer D-Struktur Ablenkgitter (51) umfasst, die zwischen einer zurückgezogenen Position, in der sich die Gitter in der ringförmigen Hülle (53) des medianen Abschnitts (9) befinden, und einer ausgefahrenen Position, in der die Gitter stromabwärts der ringförmigen Hülle (53) verschoben sind, bewegt werden können, wobei der stromabwärtige Abschnitt (11) in einer D-Struktur zwei Halbstrukturen (17a, 17b) in einem D umfasst, die jeweils umfassen:
- eine externe Halbhaube (33a, 33b), die bei Aktivierung von Betätigungsmitteln entlang einer im Wesentlichen längsgerichteten Achse der Antriebseinheit (1) zwischen einer zurückgezogenen Position, die eine aerodynamische Kontinuität mit der Gebläsehaube (55) und einer ringförmigen Ader (71) für eine Funktion der Gondel (3) im Direktstrahl sicherstellt, und einer ausgefahrenen Position, die einen ringförmigen Durchgang in der Gondel für eine Funktion der Gondel im Rückstrahl öffnet, bewegt werden kann;
- ein Verbindungsmittel zwischen den Ablenkgittern (51) und der externen Halbhaube (33a, 33b), das so angeordnet ist, dass sich die Ablenkgitter (51) bei Aktivierung der Betätigungsmittel gemeinsam mit der externen Halbhaube (33a, 33b) verschieben;
- eine Halbabzweigung auf zwölf Uhr (21a, 21b);
- eine innere Halbstruktur (19a, 19b), die einen inneren Teil der ringförmigen Rippe (71) der Gondel definiert, wenn die Gondel (3) in Betrieb ist, wobei die innere Halbstruktur über die Halbabzweigung auf zwölf Uhr (21a, 21b) mit der externen Halbhaube (33a, 33b) verbunden ist;
wobei die Antriebseinheit (1) **dadurch gekennzeichnet ist, dass** sie einen Halbträger auf zwölf Uhr (25a, 25b), der auf der Halbabzweigung auf zwölf Uhr (21a, 21b) montiert ist und eine Gleitschiene (29a, 29b) in Translation der externen Halbhaube (33a, 33b) stützt und an dem Trägermast (15) angelenkt ist, und ein axiales Haltemittel des stromabwärtigen Abschnitts (11) in einer D-Struktur der Gondel bezüglich des Turbostrahltriebwerks (5) umfasst, wobei das axiale Haltemittel dazu bestimmt ist, eine Verbindung sicherzustellen, die ein axiales Halten zwischen mindestens einem der Halbträger auf zwölf Uhr (25a, 25b) und einem festen Element (72) des Gebläsegehäuses (45) des Turbostrahltriebwerks definiert.

2. Antriebseinheit (1) nach Anspruch 1, wobei der Halbträger auf zwölf Uhr (25a, 25b) am Trägermast (15) durch eine Scharniergruppe (35) angelenkt ist, wobei die Scharniere (35) Endkappen (37) auf den Halbträgern auf zwölf Uhr (25a, 25b) umfassen, **dadurch gekennzeichnet, dass** das axiale Haltemittel mindestens einen Halteschaft (77) umfasst, von dem ein erstes Ende (79) an mindestens eine der Endkappen (37) einerseits angebracht ist, und von dem ein zweites Ende (81) am festen Element (72) des Gebläsegehäuses (45) des Turbostrahltriebwerks (5) andererseits angebracht ist, wobei der Halteschaft (77) dazu bestimmt ist, einen doppeltwirkenden Anschlag zwischen mindestens einer der Endkappen (37) und dem festen Element des Gebläsegehäuses (45) des Turbostrahltriebwerks (5) zu definieren.

3. Antriebseinheit (1) nach Anspruch 2, **dadurch gekennzeichnet, dass** der Halteschaft (77) eine Längsachse umfasst, die koaxial mit der Längsachse der mindestens einen der Endkappen (37) ist, an der der Halteschaft (77) angebracht ist.

4. Antriebseinheit (1) nach Anspruch 2 oder 3, **dadurch gekennzeichnet, dass** das feste Element (72) des Gebläsegehäuses (45) des Turbostrahltriebwerks (5) eine Haltelasche (83) umfasst, die eine Bohrung aufweist, deren Längsachse koaxial mit der Längsachse der mindestens einen der Endkappen (37) ist, an der der Halteschaft (77) angebracht ist.

5. Antriebseinheit (1) nach Anspruch 4, **dadurch gekennzeichnet, dass** der Halteschaft (77) an der Halteslasche (83) des festen Elements (72) des Gebläsegehäuses (45) des Turbostrahltriebwerks (5) so montiert ist, dass ein radiales Spiel (J) zwischen dem Halteschaft (77) und der Bohrung der Haltelasche (83) definiert wird.

6. Antriebseinheit (1) nach Anspruch 1, wobei der Halbträger auf zwölf Uhr (25a, 25b) am Trägermast (15) durch eine Scharniergruppe (35) angelenkt ist, wobei die Scharniere (35) Endkappen (37) auf den Halbträgern auf zwölf Uhr (25a, 25b) umfassen, **dadurch gekennzeichnet, dass** das axiale Haltemittel mindestens eine Haltestange (85) umfasst, von der ein erstes Ende (87) an mindestens einem der Halbträger auf zwölf Uhr (25a, 25b) angebracht ist, und von der ein zweites Ende (89) an dem festen Element (72) des Gebläsegehäuses (45) des Turbostrahltriebwerks (5) angebracht ist.

7. Antriebseinheit (1) nach Anspruch 6, **dadurch gekennzeichnet, dass** das erste Ende (87) der Haltestange (85) im Bereich eines vorderen Rands (91) des mindestens einen Halbträgers auf zwölf Uhr (25a, 25b) in der Nähe der am weitesten stromaufwärts liegenden Endkappe der Endkappen (37) der Halbträger auf zwölf Uhr (25a, 25b) montiert ist.

8. Antriebseinheit (1) nach Anspruch 1, wobei der Halbträger auf zwölf Uhr (25a, 25b) am Trägermast (15) durch eine Scharniergruppe (35) angelenkt ist, wobei die Scharniere (35) Endkappen (37) auf den Halbträgern auf zwölf Uhr (25a, 25b) umfassen, **dadurch gekennzeichnet, dass** das axiale Haltemittel umfasst:
- mindestens einen Halteschaft (77), von dem ein erstes Ende (79) an mindestens einer der Endkappen (37) einerseits angebracht ist und von dem ein zweites Ende (81) am festen Element (72) des Gebläsegehäuses (45) des Turbostrahltriebwerks (5) andererseits angebracht ist, wobei der Halteschaft (77) dazu bestimmt ist, um einen doppeltwirksamen Anschlag zwischen der mindestens einen der Endkappen (37) und dem festen Element (72) des Gebläsegehäuses (45) des Turbostrahltriebwerks (5) zu definieren,
- mindestens eine Haltekappe, die im Bereich des ersten Endes des Halteschafts (77) montiert ist, und
- eine Haltestange (85), von der ein erstes Ende (87) auf der Haltekappe montiert ist und von der ein zweites Ende (89) auf dem festen Element (72) des Gebläsegehäuses (45) des Turbostrahltriebwerks (5) montiert ist.

9. Antriebseinheit (1) nach einem der Ansprüche 1 bis 8, **dadurch gekennzeichnet, dass** das axiale Haltemittel dazu bestimmt ist, um eine Verbindung sicherzustellen, die ein axiales Halten zwischen einem stromaufwärtigen Rand (91) des mindestens einen der Halbträger auf zwölf Uhr (25a, 25b) und dem festen Element (72) des Gebläsegehäuses (45) des Turbostrahltriebwerks (5) definiert.

10. Antriebsgruppe nach einem der Ansprüche 1 bis 9, wobei das Gebläsegehäuse (45) des Turbostrahltriebwerks (5) in seinem stromabwärtigen Teil einen Ablenkungsrand (63) umfasst, **dadurch gekennzeichnet, dass** das feste Element (72) des Gebläsegehäuses (45) des Turbostrahltriebwerks (5) den Ablenkungsrand (63) umfasst und dass das axiale Haltemittel dazu bestimmt ist, um eine Verbindung sicherzustellen, die ein axiales Halten zwischen mindestens einem der Halbträger auf zwölf Uhr (25a, 25b) und dem Ablenkungsrand (63) des Gebläsegehäuses (45) des Turbostrahltriebwerks (5) definiert.

11. Luftfahrzeug, umfassend mindestens eine Antriebseinheit (1) nach einem der Ansprüche 1 bis 10.

## Claims

1. A propulsion unit (1) for an aircraft, comprising a turbojet engine (5), said turbojet engine comprising a fan casing (45), a nacelle (3) and a suspension pylon (15), connecting said nacelle to a wing of the aircraft, said nacelle comprising:
- an upstream air inlet section;
- a median section (9), in the downstream extension of said upstream section, comprising a fan cowl (55), the annular space comprised between the fan cowl (55) and the fan casing (45) of the turbojet engine (5) defining an annular envelope (53);
- a D-shaped structure downstream section (11) embedding a thrust reverser device, said downstream section (11) with a D-shaped structure comprising cascades vane (51) movable between a retracted position wherein the cascades are housed in said annular envelope (53) of the median section (9) and a deployed position wherein said cascades are displaced downstream of said annular envelope (53), said downstream section (11) having a D-shaped structure comprising two D-shaped half-structures (17a , 17b) each comprising:
∘ an outer half-cowl (33a, 33b), movable in translation during the activation of actuating means along a substantially longitudinal axis of the propulsion unit (1), between a retracted position ensuring aerodynamic continuity with the fan cowl (55) and an annular flow path (71), for an operation of the nacelle (3) in direct jet and a deployed position opening an annular passage in the nacelle for an operation of the nacelle in reverse jet;
∘ a connection means between the cascades vane (51) and said outer half-cowl (33a, 33b), arranged so that the cascades vane (51) are displaced simultaneously with said outer half-cowl (33a, 33b) during the activation of said actuating means;
∘ a twelve o'clock half-bifurcation (21a, 21b);
∘ an inner half-structure (19a, 19b) defining an inner portion of the annular flow path (71) of the nacelle when the nacelle (3) is in operation, said inner half-structure being connected to said outer half-cowl (33a, 33b) by said twelve o'clock half-bifurcation (21a, 21b);
said propulsion unit (1) being **characterized in that** it includes a twelve o'clock half-beam (25a, 25b), mounted on the twelve o'clock half-bifurcation (21a, 21b), supporting a translational sliding rail (29a, 29b) of the outer half-cowl (33a, 33b) and articulated on said suspension pylon (15), and axial retention means for axial retention of the D-shaped structure downstream section (11) of the nacelle, with respect to the turbojet engine (5), said axial retention means being designed to provide a connection defining an axial retention between at least one of said twelve-o'clock half-beams (25a, 25b) and a fixed element (72) of the fan casing (45) of the turbojet engine (5).

2. The propulsion unit (1) according to claim 1, wherein said twelve o'clock half-beam (25a, 25b) is articulated on said suspension pylon (15) by means of a set of hinges (35), said hinges (35) including yokes (37) on said twelve o'clock half-beams (25a, 25b), **characterized in that** the axial retention means includes at least one retention rod (77), which first end (79) is attached to at least one of said yokes (37) on one hand and which second end (81) is attached to the fixed element (72) of the fan casing (45) of the turbojet engine (5) on the other hand, said retention rod (77) being designed to define a double-acting abutment between said at least one of said yokes (37) and said fixed element of the fan casing (45) of the turbojet engine (5).

3. The propulsion unit (1) according to claim 2, **characterized in that** the retention rod (77) includes a longitudinal axis coaxial with the longitudinal axis of said at least one of said yokes (37) on which said retention rod (77) is attached.

4. The propulsion unit (1) according to any of claims 2 or 3, **characterized in that** the fixed element (72) of the fan casing (45) of the turbojet engine (5) includes a retention lug (83) having a bore which longitudinal axis is coaxial with the longitudinal axis of said at least one of said yokes (37) on which said retention rod (77) is attached.

5. The propulsion unit (1) according to claim 4, **characterized in that** the retention rod (77) is mounted in the retention lug (83) of the fixed element (72) of the fan casing (45) of the turbojet engine (5) so as to define a radial clearance (J) between said retention rod (77) and the bore of said retention lug (83).

6. The propulsion unit (1) according to claim 1, wherein said twelve o'clock half-beam (25a, 25b) is articulated on said suspension pylon (15) by means of a set of hinges (35), said hinges (35) including yokes (37) on said twelve o'clock half-beams (25a, 25b), **characterized in that** the axial retention means includes at least one retention tie rod (85), which first end (87) is mounted on at least one of said twelve o'clock half-beams (25a, 25b) and which second end (89) is mounted on the fixed element (72) of the fan casing (45) of the turbojet engine (5).

7. The propulsion unit (1) according to claim 6, **characterized in that** the first end (87) of the retention tie rod (85) is mounted at an upstream edge (91) of said at least one of said twelve o'clock half-beams (25a, 25b), in the vincinity of the most upstream yoke of said yokes (37) of said twelve o'clock half-beams (25a, 25b).

8. The propulsion unit (1) according to claim 1, wherein said twelve o'clock half-beam (25a, 25b) is articulated on said suspension pylon (15) by means of a set of hinges (35), said hinges (35) including yokes (37) on said twelve o'clock half-beams (25a, 25b), **characterized in that** the axial retention means includes:
- at least one retention rod (77), which first end (79) is attached to at least one of said yokes (37) on one hand and which second end (81) is attached to the fixed element (72) of the fan casing (45) of the turbojet engine (5) on the other hand, said retention rod (77) being designed to define a double-acting abutment between said at least one of said yokes (37) and said fixed element (72) of the fan casing (45) of the turbojet engine (5),
- at least one retention yoke, mounted at the first end of said retention rod (77), and
- a retention tie rod (85), which first end (87) is mounted on said retention yoke and which second end (89) is mounted on the fixed element (72) of the fan casing (45) of the turbojet engine (5).

9. The propulsion unit (1) according to any one of claims 1 to 8, **characterized in that** the axial retention means is designed to provide a connection defining an axial retention between an upstream edge (91) of said at least one of said twelve o'clock half-beams (25a, 25b) and the fixed element (72) of the fan casing (45) of the turbojet engine (5).

10. The propulsion unit according to any one of claims 1 to 9, wherein the fan casing (45) of the turbojet engine (5) includes in its downstream portion a deflection edge (63), **characterized in that** the fixed element (72) of the fan casing (45) of the turbojet engine (5) includes said deflection edge (63) and **in that** the axial retention means is designed to provide a connection defining an axial retention between at least one of said twelve o'clock half-beams (25a, 25b) and said deflection edge (63) of the fan casing (45) of the turbojet engine (5).

11. An aircraft including at least one propulsion unit (1) according to any one of claims 1 to 10.
